# EUROPÄISCHE PATENTANMELDUNG

(11) **EP 3 425 137 A1**
(43) Veröffentlichungstag der Anmeldung: **09.01.2019**
(21) Anmeldenummer: 18181387.4
(22) Anmeldetag: 03.07.2018
(51) Int. Cl.: E04G 5/16, E04G 1/12, E04G 7/34, B21D 22/02, B21D 39/04

(54) **GERÜSTELEMENT MIT EINER VERPRESSUNG ALS VERBINDUNG ZWISCHEN KOMPONENTEN MIT HILFE EINER EINFORMUNG UND VERFAHREN ZUR HERSTELLUNG DES GERÜSTELEMENTS**

(30) Priorität: 03.07.2017 DE 102017211288
(71) Anmelder: PERI GMBH, 89264 Weissenhorn (DE)
(72) Erfinder: STECK, Tobias, 89264 Weißenhorn (DE); Mikic, Erzad, 76185 Karlsruhe (DE)
(74) Vertreter: Kohler Schmid Möbus Patentanwälte

(57) **Zusammenfassung**

Offenbart wird ein Gerüstelement (10) in Form eines Diagonalriegels (einer Vertikaldiagonalen) für ein zerlegbares Gerüst. Das Gerüstelement (10) weist eine erste und eine zweite Komponente (12, 16) auf, welche alleinig mit Hilfe einer formschlüssigen Verbindung starr miteinander verbunden, d. h. aneinander befestigt, sind. Die erste Komponente (12) weist ein Hohlprofil (14) auf, in dessen Innerem (28) ein innenliegender Abschnitt (26) der zweiten Komponente (16) angeordnet ist. Das Hohlprofil (14) weist einen Umfangsmantel (36) mit einer Aussparung (30) auf. Die zweite Komponente (16) tritt, ausgehend vom innenliegenden Abschnitt (26), durch die Aussparung (30) durch und ragt vom Hohlprofil (14) in einer zur Profil-Längsachse A des Hohlprofils (14) senkrechten Richtung weg. Der Umfangsmantel (36) weist eine Einformung (44) auf, welche in Eingriff mit dem innenliegenden Abschnitt (26) ist. Die Erfindung betrifft darüber hinaus ein Verfahren zum Herstellen eines Gerüstelements (10).

## Beschreibung

Die vorliegende Erfindung bezieht sich auf ein Gerüstelement, in Form einer als Vertikaldiagonale ausgeführten Diagonalstütze, für ein zerlegbares Gerüst. Insbesondere bezieht sich die vorliegende Erfindung auf ein Gerüstelement, welches zwei Komponenten aufweist, welche senkrecht zueinander stehen und mithilfe einer Verpressung starr aneinander befestigt sind.

Aus der Praxis sind Gerüstbauteile für zerlegbare Gerüste bekannt, bei welchen an beiden Enden eines Gerüstrohres ein Verbindungselement befestigt ist, um das jeweilige Gerüstbauteil innerhalb des zerlegbaren Gerüsts zu fixieren. Die eingangs genannten Vertikaldiagonalen dienen dabei der vertikalen Aussteifung von Modulgerüstkonstruktionen und sind im Montagezustand zumeist einer exzentrischen Belastung unterworfen. Diese Vertikaldiagonalen werden in der vorliegenden Anmeldung auch als Diagonalriegel bezeichnet. Die Befestigung zwischen dem Verbindungselement und dem Gerüstrohr erfolgt dabei typischerweise durch Schweißen oder durch Nieten. Es hat sich jedoch gezeigt, dass diese Art der Verbindung zwischen dem Verbindungselement und dem Gerüstrohr hohe Kosten bei der Herstellung der Diagonalstütze verursacht. Des Weiteren wirken auf die Schweiß- oder Nietverbindungen im Betriebseinsatz des Gerüstbauteils hohe Kräfte, da diese typischerweise in Krafteinleitungszonen angeordnet sind. Um einem Auseinanderbrechen der Verbindung vorzubeugen, müssen daher die Schweiß- oder Nietverbindungen aufwändig ausgebildet werden, um die erforderliche Stabilität und Langlebigkeit aufzuweisen. Eine Prüfung der Schweißverbindungen auf Beschädigung bzw. Ermüdung ist dabei nur mit einem ungebührend hohen Aufwand möglich.

Im Hinblick auf das Vorhergehende ist es die Aufgabe der Erfindung, ein Gerüstelement in Form eines Diagonalriegels bzw. einer Vertikaldiagonalen mit einem ausreichend großen Lastaufnahmevermögen bereitzustellen, welches effizient herstellbar ist und welches einen geringen Wartungs- und Reparaturbedarf hat. Ferner soll ein kosteneffizientes Herstellungsverfahren für ein derartiges Gerüstelement bereitgestellt werden. Die das Gerüstelement betreffende Aufgabe wird durch den Gegenstand des unabhängigen Anspruchs 1 gelöst. Das erfindungsgemäße Herstellungsverfahren weist die in Anspruch 17 angegebenen Merkmale auf. Bevorzugte Ausführungsformen sind Gegenstand der Unteransprüche.

Das Gerüstelement in Form eines Diagonalriegels (Vertikaldiagonalen) ist für ein zerlegbares Gerüst ausgebildet und weist eine erste und eine zweite Komponente auf, welche aneinander befestigt sind. Die erste Komponente weist ein Hohlprofil auf, in dessen Innerem ein innenliegender Abschnitt der zweiten Komponente angeordnet ist. Das Hohlprofil weist einen Umfangsmantel mit einer Aussparung auf. Die zweite Komponente tritt, ausgehend vom innenliegenden Abschnitt, durch die Aussparung hindurch und ragt vom Hohlprofil in einer zur Profil-Längsachse (A) des Hohlprofils senkrechten Richtung nach außen weg. Mit anderen Worten erstreckt sich die zweite Komponente in einer zur Profil-Längsachse radialen Richtung vom Hohlprofil weg und schließt mit der Längsachse einen rechten Winkel ein. Der Umfangsmantel weist dabei eine Einformung auf, welche in Eingriff mit dem innenliegenden Abschnitt der zweiten Komponente ist.

Die erste Komponente und die zweite Komponente sind alleinig mittels Verpressung starr aneinander befestigt. Die starre Befestigung ist mithilfe der Einformung bereitgestellt.

Durch den Eingriff zwischen der Einformung und dem innenliegenden Abschnitt ist es möglich, eine formschlüssige und feste Verbindung zwischen der ersten und der zweiten Komponente bereitzustellen, so dass auf eine Schweißung und/oder auf zusätzliche Befestigungselemente ganz verzichtet werden kann. Der Formschluss durch die Einformung erlaubt ferner eine großflächige Krafteinleitung, wodurch die Gefahr einer plastischen Verformung der Bauteile verringert wird. Folglich wird die Herstellung des Gerüstelements vereinfacht und die Zuverlässigkeit desselben erhöht.

Das Gerüstelement kann für ein Systemgerüst, beispielsweise für ein Rahmengerüst oder ein Modulgerüst, insbesondere aus herstellerspezifischen Systemkomponenten, ausgebildet sein. Die erste Komponente des Gerüstelements kann beispielsweise ein longitudinales Gerüstrohr sein. Die zweite Komponente kann einen Kupplungs- oder Verbindungsabschnitt zur lösbaren Befestigung des Gerüstelements im Gerüst aufweisen. Beispielsweise kann die zweite Komponente einen Einhängehaken und/oder ein Sicherungs- oder Arretierelement aufweisen.

Gemäß einer weiteren Ausführungsform der Erfindung sind in einem Querschnitt senkrecht (unter einem Winkel von 90°) zu einer Profil-Längsachse des Hohlprofils, mit Hilfe der Einformung, das Hohlprofil und der innenliegende Abschnitt in Umfangsrichtung formschlüssig verzahnt. In anderen Worten kann, gesehen in dem Querschnitt, die Einformung zwei zueinander entgegengesetzte Flanken aufweisen, welche im Eingriff mit zwei zueinander entgegengesetzten Gegenflanken der zweiten Komponente sind. Jede der Flanken ist also im Eingriff mit einer der Gegenflanken.

Gemäß einer weiteren Ausführungsform der Erfindung ist zumindest ein Teil der Einformung rinnenförmig ausgebildet. Eine Rinnenachse des rinnenförmigen Abschnitts kann im Wesentlichen parallel zur Profil-Längsachse des Hohlprofils verlaufen. Die Einformung kann an einer Stirnseite der ersten Komponente münden. Dadurch kann eine besonders feste und steife formschlüssige Verbindung zwischen der ersten und der zweiten Komponente realisiert werden. Insbesondere muss die Orientierung der zweiten Komponente relativ zur Profil-Längsachse der ersten Komponente fest und formschlüssig stabilisiert, d. h. lagefixiert, werden.

Gemäß einer weiteren Ausführungsform ist die wenigstens eine Einformung ein Element wenigstens eines Paares an Einformungen, wobei jede der Einformungen im Eingriff mit der zweiten Komponente ist. Mit anderen Worten weist die erste Komponente zwei Einformungen auf. Das Paar an Einformungen kann im Umfangsmantel ausgebildet sein. Die Einformungen können in einem Querschnitt senkrecht (unter einem Winkel von 90°) zur Profil-Längsachse des Hohlprofils eine taillenartige Einschnürung des Hohlprofils bilden. Jede der Einformungen kann zumindest teilweise rinnenförmig ausgebildet sein. Die Einformungen können im Wesentlichen ebenensymmetrisch zueinander ausgebildet sein. Die Einschnürung ermöglicht eine besonders steife formschlüssige Verbindung zwischen der ersten und der zweiten Komponente.

Nach einer bevorzugten Weiterbildung der Erfindung ist die Aussparung in einem Querschnitt senkrecht (unter einem Winkel von 90°) zur Profil-Längsachse des Hohlprofils in Umfangsrichtung zwischen den Einformungen des Paares an Einformungen angeordnet.

Gemäß einer weiteren Ausführungsform der Erfindung ist - in einem Querschnitt senkrecht (unter einem Winkel von 90°) zur Profil-Längsachse des Hohlprofils - ein freier Durchmesser der Aussparung größer als ein freier Durchmesser der Einschnürung. Dadurch ist eine Konfiguration möglich, in welcher der innenliegende Abschnitt durch die Aussparung hindurch in das Innere des Hohlprofils einführbar und anschließend durch Ausbilden der Einformungen verankerbar ist.

Nach einer Weiterbildung der Erfindung ist ein freier Querschnitt der Aussparung des Umfangsmantels zur Durchführung eines Endabschnitts der zweiten Komponente durch die Aussparung hindurch ausgebildet, wobei der Endabschnitt den innenliegenden Abschnitt aufweist. Dadurch ist es möglich, den innenliegenden Abschnitt durch die Aussparung hindurch im Inneren des Hohlprofils der ersten Komponente anzuordnen.

Gemäß einer weiteren Ausführungsform weist das Hohlprofil eine zweite Aussparung auf. In einem Querschnitt senkrecht (unter einem Winkel von 90°) zur Profil-Längsachse des Hohlprofils sind, gesehen in Umfangsrichtung des Hohlprofils, die Einformungen und die Aussparungen alternierend angeordnet.

Durch diese Anordnung von Aussparungen und Einformungen kann eine nochmals steifere und laststabilere formschlüssige Verbindung zwischen der ersten und der zweiten Komponente erhalten werden.

Die zweite Komponente kann nach der Erfindung im Eingriff mit zumindest einem Randabschnitt eines Randes der ersten und/oder zweiten Aussparung sein. Die zweite Komponente kann zwischen den beiden Aussparungen das Innere des Hohlprofils durchgreifen. Die zweite Komponente kann einen freien Querschnitt der ersten und/oder zweiten Aussparung ausfüllen. Die zweite Komponente kann den freien Querschnitt dabei insbesondere so ausfüllen, dass die zweite Komponente spielfrei oder spielbehaftet in der jeweiligen Aussparung aufgenommen ist. Dies ermöglicht eine Krafteinleitung über den Rand der jeweiligen Aussparung sowie eine großflächige Krafteinleitung zwischen der ersten und der zweiten Komponente.

Gemäß einer weiteren Ausführungsform der Erfindung weist die zweite Komponente eine Ausnehmung auf, in welche die Einformung der ersten Komponente eingreift. Die Ausnehmung kann insbesondere zumindest abschnittsweise rinnenförmig ausgebildet sein. Eine Rinnenachse der rinnenförmigen Ausbildung kann dabei im Wesentlichen parallel zur Profil-Längsachse des Hohlprofils orientiert sein. Die Ausnehmung kann in jede von zwei entgegengesetzten stirnseitigen Flächen der zweiten Komponente münden.

Gemäß einer weiteren Ausführungsform weist die Einformung zwei Vertiefungen auf, welche, entlang der Rinnenachse gesehen, voneinander beabstandet sind. Jede der Vertiefungen kann mit einer Einformung im Eingriff sein, welche im Umfangsmantel ausgebildet ist. Die Ausnehmung kann im Wesentlichen sattelförmig ausgebildet sein. Mit Hilfe der Einformung und/oder mit Hilfe einer oder mehrerer weiterer Einformungen im Umfangsmantel kann ein axialer Formschluss mit dem innenliegenden Abschnitt in zumindest einer axialen Richtung relativ zur Profil-Längsachse des Hohlprofils realisiert werden. Durch den axialen Formschluss ist es möglich, die Steifheit der Verbindung zwischen der ersten und der zweiten Komponente zu erhöhen und einem unerwünschten Ausreißen der zweiten Komponente aus der ersten Komponente entgegenzuwirken.

Gesehen in einem Längsschnitt durch das Hohlprofil kann mit Hilfe der Einformung und/oder mit Hilfe der zumindest einen weiteren Einformung der Umfangsmantel mit dem innenliegenden Abschnitt formschlüssig verzahnt sein. In anderen Worten kann, gesehen in dem Längsschnitt, der Umfangsmantel zwei zueinander entgegengesetzte Flanken aufweisen, welche im Eingriff mit zwei zueinander entgegengesetzten Gegenflanken der zweiten Komponente sind.

Gemäß einer weiteren Ausführungsform ist die Aussparung in einem im Wesentlichen ebenen Abschnitt des Umfangsmantels ausgebildet. Dadurch kann die Aussparung schnell und präzise durch Stanzen ausgebildet werden.

Der ebene Abschnitt kann sich im Wesentlichen entlang der Profil-Längsachse des Hohlprofils erstrecken. Der Umfangsmantel kann einen zweiten ebenen Abschnitt aufweisen, in welchem die zweite Aussparung des Umfangsmantels ausgebildet ist. Die ebenen Abschnitte können im Wesentlichen parallel zueinander ausgerichtet sein. Beide ebenen Abschnitte können Profilabschnitte sein, deren Profil-Längsachsen im Wesentlichen parallel zur Profil-Längsachse des Hohlprofils verlaufen.

Gemäß einer weiteren Ausführungsform ist ein Rand der Aussparung zu einem stirnseitigen Ende des Hohlprofils offen. Dies ermöglicht eine Konfiguration, in welcher die zweite Komponente nicht durch die Aussparung in das Innere des Hohlprofils eingeführt werden muss. Dies erleichtert die Montage und/oder erlaubt es, den innenliegenden Abschnitt unabhängig vom Querschnitt der Aussparung auszubilden. Es bestehen daher mehr Freiheitsgrade für eine Optimierung einer Geometrie des innenliegenden Abschnitts und des Hohlprofils.

Gemäß einer weiteren Ausführungsform ist ein Umfangsabschnitt des Umfangsmantels um die zweite Komponente umgelegt. Der Umfangsabschnitt kann ein stirnseitiger Endabschnitt des Umfangsmantels sein. Der Umfangsabschnitt kann in Richtung zu einem Inneren des Hohlprofils abgewinkelt sein. Bevorzugt sind zwei Umfangsabschnitte des Umfangsmantels um die zweite Komponente umgelegt. Die Umfangsabschnitte können, gesehen in Umfangsrichtung des Hohlprofils im Wesentlichen gegenüberliegend sein. Die Umfangsabschnitte können zueinander abgewinkelt sein. Dies ermöglicht eine effiziente Herstellung der Verbindung, da der innenliegende Abschnitt der zweiten Komponente nicht durch die Aussparung in das Innere des Hohlprofils eingeführt werden muss. Des Weiteren können dadurch scharfe Kanten am stirnseitigen Ende des Hohlprofils vermieden werden und die Krafteinleitung kann über eine große Fläche erfolgen, da eine Krafteinleitung über die umgelegten Umfangsabschnitte erfolgen kann.

Gemäß einer weiteren Ausführungsform weist die zweite Komponente einen Verbindungsabschnitt auf. Der Verbindungsabschnitt kann zur Befestigung des Gerüstelements innerhalb des Gerüsts ausgebildet sein. Der Verbindungsabschnitt kann beispielsweise ein Sicherungselement und/oder einen Einhängehaken aufweisen. Der Verbindungsabschnitt kann in einem Äußeren des Hohlprofils (das heißt außerhalb des Umfangsmantels des Hohlprofils) angeordnet sein.

Das Verfahren ist zur Herstellung eines Gerüstelements in Form eines Diagonalriegels (d. h. einer Vertikaldiagonalen), für ein zerlegbares Gerüst konfiguriert. Das Gerüstelement weist eine erste und eine zweite Komponente auf, welche alleinig mittels Verpressung starr aneinander befestigt sind. Das Verfahren umfasst ein Ausbilden einer Aussparung in einem Umfangsmantel eines Hohlprofils einer ersten Komponente. Das Verfahren umfasst ferner ein Anordnen einer zweiten Komponente des Gerüstelements, so dass ein innenliegender Abschnitt der zweiten Komponente in einem Inneren des Hohlprofils angeordnet ist. Die zweite Komponente tritt, ausgehend vom innenliegenden Abschnitt, durch die Aussparung durch und ragt vom Hohlprofil in einer zur Profil-Längsachse A des Hohlprofils senkrechten (orthogonalen) Richtung, weg. Das Verfahren weist ferner ein Einformen des Umfangsmantels auf, um eine Einformung im Umfangsmantel auszubilden, welche im Eingriff mit dem innenliegenden Abschnitt ist. Die vorstehend genannten Vorteile für das Gerüstelement gelten entsprechend für die Merkmale des Verfahrens.
Gemäß einer weiteren Ausführungsform des Verfahrens dient bei dem Einformen die zweite Komponente als Matrize für das Einformen. Das Einformen kann ein Aufdrücken eines Stempels auf eine Außenfläche des Umfangsmantels umfassen. Die zweite Komponente kann als Matrize für den Stempel ausgebildet sein. Insbesondre kann die zweite Komponente eine Oberflächenkontur aufweisen, welche komplementär zur Oberflächenstruktur des Stempels ausgebildet ist.

Gemäß einer weiteren Ausführungsform des Verfahrens umfasst das Verfahren ein Ausbilden eines ebenen Abschnitts im Umfangsmantel, wobei die Aussparung im ebenen Abschnitt angeordnet ist. Das Ausbilden des ebenen Abschnitts kann vor oder nach dem Ausbilden der Aussparung durchgeführt werden. Die Aussparung kann beispielsweise durch Stanzen ausgebildet werden.

Gemäß einer weiteren Ausführungsform des Verfahrens ist nach dem Einformen des Umfangsmantels die zweite Komponente im Eingriff mit zumindest einem Teil eines Randes der Aussparung.

Gemäß einer weiteren Ausführungsform umfasst das Verfahren ein Ausbilden einer zweiten Aussparung im Umfangsmantel. Nach dem Einformen des Umfangsmantels kann die zweite Komponente im Eingriff mit zumindest einem Randabschnitt eines Randes der zweiten Aussparung sein. Der innenliegende Abschnitt kann zwischen den zwei Aussparungen das Innere des Hohlprofils durchgreifen.

Gemäß einer weiteren Ausführungsform umfasst das Verfahren ein Ausbilden eines ersten ebenen Abschnitts und eines zweiten ebenen Abschnitts im Umfangsmantel. In jedem der ebene Abschnitte kann jeweils eine der Aussparungen ausgebildet sein. Das Ausbilden des ersten und/oder des zweiten ebenen Abschnitts kann jeweils vor oder nach dem Ausbilden der Aussparung durchgeführt werden, welche im jeweiligen ebenen Abschnitt angeordnet ist.

Weitere Merkmale und Vorteile der Erfindung ergeben sich aus den nachfolgend beschriebenen Figuren, welche Ausführungsbeispiele der Findung wiedergegeben, und erfindungswesentliche Einzelheiten illustrieren. Die Erfindung ist allerdings nicht auf die anhand der Figuren erläuterten Ausführungsbeispiele beschränkt.

In der Zeichnung zeigen:
- Fig. 1a:: einen Endabschnitt eines Gerüstelements in Form einer Vertikaldiagonalen gemäß einem ersten Ausgangsbeispiel in einer perspektivischen Ansicht;
- Fig. 1b:: eine perspektivische Ansicht einer zweiten Komponente des Gerüstelements gemäß Fig. 1a;
- Fig. 2:: den Endabschnitt des Gerüstelements gemäß Figur 1a, in einer Seitenansicht;
- Fig. 3:: das Gerüstelement gemäß Fig. 1 in unterschiedlichen Querschnitten gemäß den in der Figur 2 gezeigten Schnittlinien;
- Fig. 4:: ein Blockdiagramm mit einzelnen Verfahrensschritten eines Verfahrens zur Herstellung von Gerüstelementen in Form von Vertikaldiagonalen gemäß den beschriebenen Ausführungsbeispielen;
- Fign. 5a und 5b:: Querschnitte durch das Gerüstelement zur Illustration einzelner Verfahrensschritte des Verfahrens gemäß Fig. 4;
- Fig. 6a:: einen Endabschnitt eines Gerüstelements in Form einer Vertikaldiagonalen gemäß einem zweiten Ausführungsbeispiel, in einer perspektivischen Ansicht;
- Fig. 6b:: eine zweite Komponente des Gerüstelements gemäß Fig. 6a, in einer perspektivischen Ansicht;
- Fig. 6c:: den Endabschnitt des Gerüstelements gemäß Figur 6a, in einer stirnseitigen Ansicht;
- Fig. 7a:: ein Gerüstelement in Form einer Vertikaldiagonalen gemäß einem dritten Ausgangsbeispiel, in einer perspektivischen Ansicht;
- Fig. 7b:: einen Endabschnitt einer ersten Komponente des Gerüstelements gemäß Fig. 7a, in einer perspektivischen Ansicht;
- Fig. 7c:: eine zweite Komponente des Gerüstelements gemäß Fig. 7a;
- Fig. 8a:: ein Gerüstelement in Form einer Vertikaldiagonalen gemäß einem vierten Ausgangsbeispiel, in einer perspektivischen Ansicht; und
- Fig. 8b:: eine zweite Komponente des Gerüstelements gemäß Fig. 8a.

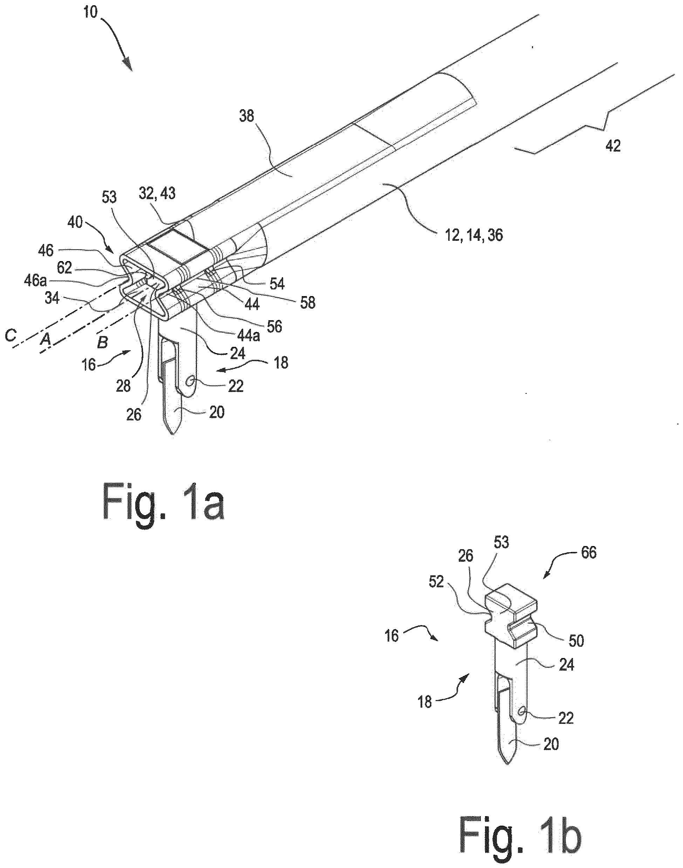

**Figur 1a** zeigt einen Endabschnitt eines Gerüstelements **10** in einer perspektivischen Ansicht. Das Gerüstelement 10 ist hier als Diagonalriegel bzw. als eine sogenannte Vertikaldiagonale, für ein Systemgerüst konfiguriert. Das Gerüstelement 10 bzw. die Vertikaldiagonale weist eine erste Komponente **12** auf, welche als Hohlprofil **14** ausgebildet ist und welche ein Gerüstrohr zur Verstrebung des Systemgerüsts bildet. Eine zweite Komponente **16** des Gerüstelements 10 ist teilweise innerhalb des Hohlprofils 14 angeordnet. Außerhalb des Hohlprofils 14 weist die zweite Komponente einen Verbindungsabschnitt **18** auf, mit Hilfe dessen der in der Fig. 1a gezeigte Endabschnitt der ersten Komponente 12 im Systemgerüst befestigbar ist.

**Figur 1b** zeigt die zweite Komponente 16 in einer perspektivischen Ansicht. Die erste und/oder die zweite Komponente 12, 16 können jeweils zumindest teilweise aus Metall gefertigt sein. Es ist jedoch denkbar, dass, zusätzlich oder alternativ, die erste und/oder zweite Komponente 12, 16 zumindest teilweise aus einem Faserverbundwerkstoff, gefertigt ist/sind.

Der Verbindungsabschnitt **18** kann, wie in den Figuren 1a und 1b gezeigt, ein Sicherungselement **20** aufweisen, welcher über ein Drehgelenk **22** des Verbindungsabschnitts 18 mit einem Halteabschnitt **24** verbunden ist. Das Sicherungselement 20 wird durch eine Durchgangsöffnung durchgeführt, welche im Gerüst vorgesehen ist, und anschließend umgelegt, um eine Fixierung des Gerüstelements 10 im Gerüst zu bewirken.

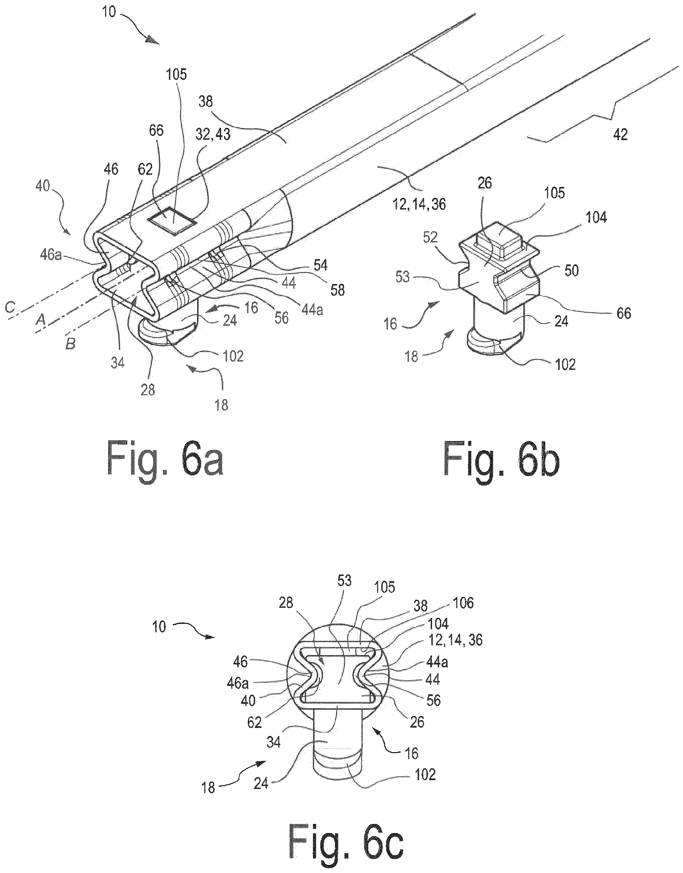

Es sind jedoch auch vielfältige alternative Ausführungen des Verbindungsabschnitts 18 denkbar. Beispielsweise kann der Verbindungsabschnitt 18 zusätzlich oder alternativ eine Einhängehaken aufweisen, wie dies weiter unten mit Bezug auf das zweite und dritte Ausführungsbeispiel beschrieben ist, welche in den Figuren 6a bis 7c dargestellt sind.

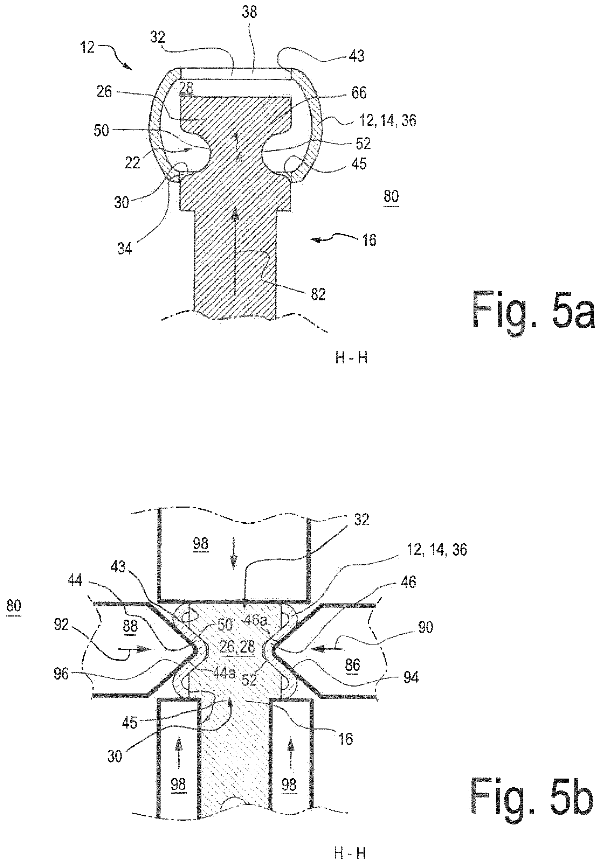

Der Verbindungsabschnitt 18 ist über den Halteabschnitt 24 mit einem innenliegenden Abschnitt **26** der zweiten Komponente 16 verbunden, welche im Inneren **28** des Hohlprofils 14 der ersten Komponente 12 angeordnet ist. Wie im Nachfolgenden mit Bezug auf die **Figur 5b** beschrieben ist, wird der innenliegende Abschnitt 26 der zweiten Komponente 16 mit der ersten Komponente 12 mit Hilfe einer Umformung formschlüssig verbunden, ohne dass weitere Befestigungselemente oder Verschweißungen vorgesehen sind. Die Umformung kann eine Kaltumformung, Halbwarmumformung und/oder Warmumformung umfassen. Bei der Halbwarmumformung weist das Werkstück bei der Umformung eine Temperatur über der Raumtemperatur, jedoch unterhalb der Rekristallisationstemperatur auf. Bei der Warmumformung weist das Werkstück bei der Umformung eine Temperatur oberhalb der Rekristallisationstemperatur auf. Die Umformung umfasst eine Verpressung der ersten Komponente 12 mit der zweiten Komponente 16. Die erste und die zweite Komponente sind mit anderen Worten alleinig durch Verpressung starr aneinander befestigt.

Das Gerüstelement 10 weist einen zweiten Endabschnitt (in den Figuren nicht gezeigt) auf, welcher gegenüberliegend zu dem in Figur 1a gezeigten Endabschnitt angeordnet ist. Der zweite Endabschnitt kann in einer zum ersten Endabschnitt entsprechenden Weise oder auch unterschiedlich zu diesem ausgebildet sein

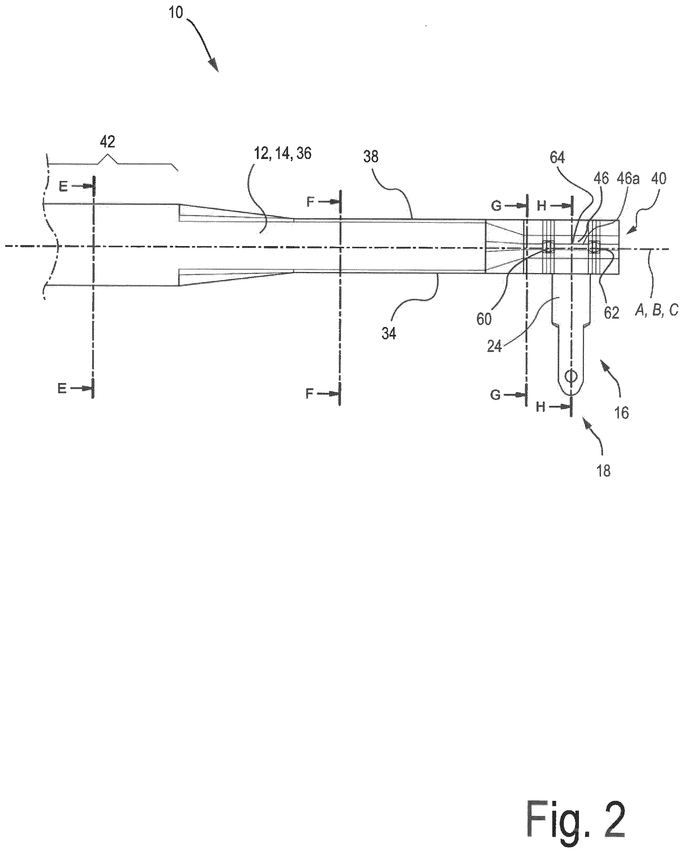

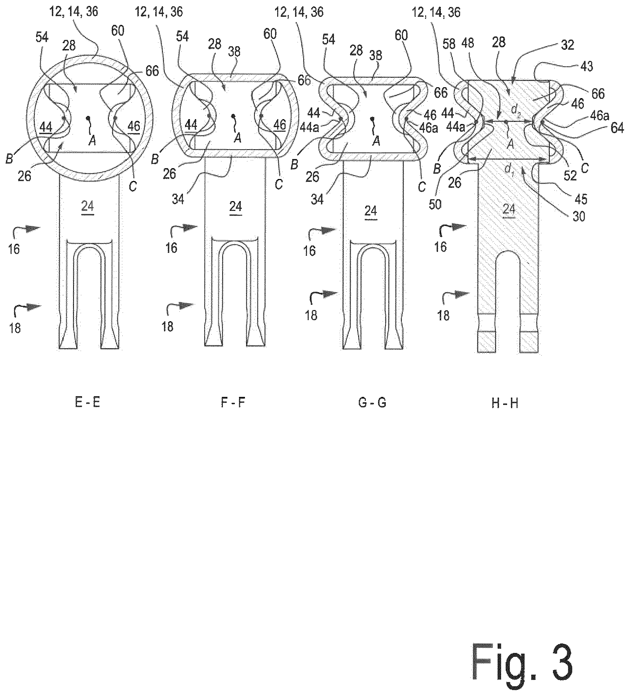

**Figur 2** zeigt den Endabschnitt des Gerüstelements 10 gemäß Figur 1a in einer Seitenansicht. In Figur 2 sind Schnittlinien an unterschiedlichen axialen Positionen entlang einer Profil-Längsachse ***A*** des Hohlprofils 14 eingezeichnet, deren Querschnitte in **Figur 3** wiedergegeben sind. In den Figuren 2 und 3 ist das Sicherungselement 20 (Fign. 1a und 1b) aus Darstellungsgründen nicht gezeigt.

Wie dies besonders deutlich in der Figur 1a und im Schnitt H-H gemäß Figur 3 dargestellt ist, weist die erste Komponente 12 eine erste Aussparung **30** und eine zweite Aussparung **32** auf, die in dem gezeigten Ausführungsbeispiel jeweils als eine Öffnung ausgebildet sind. Die Umfangskonturen der ersten und der zweiten Aussparung 30 und 32 sind gleich ausgebildet. Die Umfangskontur ist jeweils rechteckig ausgebildet. Grundsätzlich sind jedoch auch andere Umfangskonturen denkbar. Beispielsweise kann die Umfangskontur zumindest abschnittsweise eckig sein (wie beispielsweise eine quadratische oder rechteckige Umfangskontur), und/oder zumindest abschnittsweise rund sein (wie eine kreisförmige oder ovale Umfangskontur). Durch eine rechteckige oder quadratische Umfangskontur kann eine große Umfangslänge bereitgestellt werden, welche eine großflächige Krafteinleitung erlaubt.

Die erste Aussparung 30 ist in einem ersten ebenen Abschnitt **34** eines Umfangsmantels **36** der ersten Komponente 12 ausgebildet. Die zweite Aussparung 32 ist in einem zweiten ebenen Abschnitt **38** des Umfangsmantels 36 ausgebildet. Der erste ebene Abschnitt 34 und der zweite ebene Abschnitt 38 sind relativ zu einer Profil-Längsachse *A* des Hohlprofils 14 der ersten Komponente 12 gegenüberliegend angeordnet und verlaufen parallel relativ zueinander und parallel zur Profil-Längsachse *A*.

Die ebenen Abschnitte 34 und 38 haben den Vorteil, dass die Aussparungen 30 und 32 schnell und präzise durch Stanzen ausgebildet werden können. Es ist jedoch denkbar, dass das Gerüstelement 10 die ebenen Abschnitte 34 und 38 nicht aufweist, so dass die Aussparungen 30 und 32 jeweils in einem runden oder gekrümmten Profilabschnitt des Hohlprofils 14 ausgebildet sind. Im einem runden/gekrümmten Profilabschnitt können Aussparungen beispielsweise durch Fräsen ausgebildet werden.

In dem gezeigten Ausführungsbeispiel erstrecken sich der erste ebene Abschnitt 34 und der zweite ebene Abschnitt 38 jeweils von einem stirnseitigen Ende **40** der ersten Komponente 12 in Richtung hin zu einer Längsrichtungs-Mitte der ersten Komponente 12 und gehen in einen anschließenden Profilabschnitt **42** über, welcher einen kreisrunden, Profilquerschnitt aufweist, wie dies besonders deutlich im Schnitt E-E der Figur 3 dargestellt ist. Es ist jedoch denkbar, dass der Profilquerschnitt des anschließenden Profilabschnitts 42 sich von einem Rundprofil unterscheidet. Beispielsweise kann der Profilquerschnitt mehreckig sein, wie insbesondere rechteckig oder quadratisch. Am stirnseitigen Ende 40 des in der Figur 1a gezeigten Endabschnitts ist das Hohlprofil 14 offen.

Wie dies besonders deutlich in im Querschnitt H-H der Figur 3 dargestellt ist, tritt die zweite Komponente 16, ausgehend vom innenliegenden Abschnitt 26 durch die erste Aussparung 30 durch und ragt von der ersten Komponente 12 in einer zur Profil-Längsachse A des Hohlprofils 14 senkrechten (orthogonalen) Richtung weg.Die zweite Komponente 16 ist im Eingriff mit zumindest einem Abschnitt eines Randes **45** der ersten Aussparung 30 und mit zumindest einem Abschnitt eines Randes **43** der zweiten Aussparung 32. Zwischen den Aussparungen 30 und 32 durchgreift die zweite Komponente 16 das Innere 28 des Hohlprofils 14. Der Halteabschnitt 24 erstreckt sich senkrecht zur Profil-Längsachse A.

Der Umfangsmantel 36 der ersten Komponente 12 weist eine erste Einformung **44** und eine zweite Einformung **46** auf, die an einander gegenüberliegenden Abschnitten des Umfangsmantels 36 des Hohlprofils 14 ausgebildet sind. Die erste Einformung 44 und die zweite Einformung 46 sind jeweils im Eingriff mit dem innenliegenden Abschnitt 26 der zweiten Komponente 16. Wie besonders deutlich im Querschnitt H-H der Figur 3 dargestellt ist, sind die Aussparungen 30 und 32, und die Einformungen 44 und 46, gesehen in Umfangsrichtung des Hohlprofils 14, alternierend angeordnet.

Mithilfe der ersten und der zweiten Einformung 44 und 46 ist ein Formschluss mit dem innenliegenden Abschnitt 26 bewirkt, durch welchen die erste Komponente 12 mit der zweiten Komponente 16 starr verbunden ist. Die erste Einformung 44, und auch die zweite Einformung 46 sind hier jeweils rinnenförmig ausgebildet. Eine Ausdehnung der jeweiligen Rinne **44a, 46a** ist größer als eine Ausdehnung des innenliegenden Abschnitts 26, jeweils gesehen entlang der Profil-Längsachse *A*. Eine Rinnenachse ***B*** der Rinne 44a der ersten Einformung 44 und eine Rinnenachse ***C*** der Rinne 46a der zweiten Einformung 46 sind hier jeweils parallel zur Profil-Längsachse *A* des Hohlprofils 14 ausgerichtet. Die erste Einformung 44 und die zweite Einformung 46 münden jeweils in das stirnseitige Ende 40 des Hohlprofils 14. In dem Querschnitt H-H, welcher in Figur 3 dargestellt ist sind die erste und die zweite Einformung 44, 46 ebenensymmetrisch zueinander ausgebildet und bilden eine taillenartige Einschnürung **48.**

Diese Ausbildung der ersten und der zweiten Einformung 44, 46 ermöglichen eine steife und feste formschlüssige Verbindung zwischen der ersten Komponente 12 und der zweiten Komponente 16.

Gemäß Figur 1b, weist der innenliegende Abschnitt 26 der zweiten Komponente eine erste Ausnehmung **50** und eine zweite Ausnehmung **52** auf. Die erste und die zweite Ausnehmung 50, 52 sind an entgegengesetzten umfangsseitigen Oberflächenabschnitten des innenliegenden Abschnitts 26 ausgebildet. Die erste Ausnehmung 50 und die zweite Ausnehmung 52 sind jeweils rinnenförmig ausgebildet mit einer Rinnenachse, welche jeweils parallel zur Profil-Längsachse A ausgebildet ist. Die erste Einformung 44 kann so ausgebildet sein, dass, zumindest ein Flächenabschnitt einer Innenfläche der ersten Einformung 44 an zumindest einem Flächenabschnitt einer Oberfläche der ersten Ausnehmung 50 flächig anliegt. Zusätzlich oder alternativ kann die zweite Einformung 46 so ausgebildet sein, dass zumindest ein Flächenabschnitt einer Innenfläche der zweiten Einformung 46 an einem Flächenabschnitt einer Oberfläche der zweiten Ausnehmung 52 flächig anliegt. Es sind jedoch auch Konfigurationen denkbar, in welchen die Innenfläche der ersten Einformung 44 nur punktweise und/oder linienweise in angrenzendem Kontakt mit der ersten Ausnehmung 50 ist und/oder in welchen die Innenfläche der zweiten Einformung 46 nur punktweise und/oder linienweise in angrenzendem Kontakt mit der zweiten Ausnehmung 52 ist. Wie ferner in Figur 1b dargestellt ist, weist der innenliegende Abschnitt 26 eine Stirnfläche **53** auf, welche sich senkrecht zur Profil-Längsachse *A* erstreckt. Eine hierzu entgegengesetzte Stirnfläche, welche in den Figuren nicht dargestellt ist, erstreckt sich ebenfalls senkrecht zur Profil-Längsachse *A*. Die erste und die zweite Ausnehmungen 50, 52 können jeweils in die Stirnfläche 53 und in die entgegengesetzte Stirnfläche münden.

Die erste Einformung 44 greift in die erste Ausnehmung 50 ein und die zweite Einformung 46 greift in die zweite Ausnehmung 52 ein. Dadurch wird, gesehen im Querschnitt H-H (Figur 3) der Umfangsmantel 36 mit dem innenliegenden Abschnitt 26 an jeder der Einformungen in Umfangsrichtung formschlüssig verzahnt. Insbesondere bewirkt die Verzahnung zusammen mit der rinnenförmigen Ausbildung der Einformungen 44 und 46, dass die Orientierung der zweiten Komponente 16 relativ zur Profil-Längsachse stabilisiert.wird.

Wie in der Figur 1a illustriert ist, weist die erste Einformung 44 eine erste Vertiefung **54** und eine zweite Vertiefung **56** auf, welche in Richtung der Profil-Längsachse *A* voneinander beabstandet angeordnet sind. Die erste und die zweite Vertiefung 54, 56 sind jeweils tiefer ausgebildet, als ein Abschnitt **58** der ersten Einformung 44, welcher sich zwischen der ersten Vertiefung 54 und der zweiten Vertiefung 56 erstreckt. Durch die erste Vertiefung 54 wird ein axialer Eingriff mit dem innenliegenden Abschnitt 26 erzeugt, welcher Bewegungen der zweiten Komponente 16 entlang der Profil-Längsachse *A* hin zur Längsrichtungs-Mitte der ersten Komponente 12 sperrt. Durch die zweite Vertiefung 56 wird ein axialer Eingriff erzeugt, welcher Bewegungen der zweiten Komponente 16 entlang der Profil-Längsachse A hin zum stirnseitigen Ende 40 der ersten Komponente 12 sperrt. Folglich ist mit Hilfe der ersten und der zweiten Vertiefung 54, 56 ein axialer Formschluss mit dem innenliegenden Abschnitt in beiden axialen Richtungen relativ zur Profil-Längsachse *A* des Hohlprofils 14 bewirkt. Gesehen in einem Längsschnitt durch das Hohlprofil 14 wird damit mit Hilfe der Vertiefungen 54 und 56 der Umfangsmantel 36 mit dem innenliegenden Abschnitt 26 formschlüssig verzahnt.
Die zweite Einformung 46 ist entsprechend zur ersten Einformung 44 ausgebildet: wie in der **Figur 2** illustriert ist, weist die zweite Einformung 46 eine erste Vertiefung **60** und eine zweite Vertiefung **62** auf, welche, gesehen entlang der Profil-Längsachse *A*, beabstandet voneinander angeordnet sind. Die erste und die zweite Vertiefung 60, 62 sind jeweils tiefer ausgebildet, als ein Abschnitt **64** der zweiten Einformung 46, welcher sich zwischen der ersten Vertiefung 60 und der zweiten Vertiefung 62 erstreckt. Durch die erste Vertiefung 60 wird ein axialer Formschluss erzeugt, welcher Bewegungen der zweiten Komponente 16 entlang der Profil-Längsachse A hin zur Längsrichtungs-Mitte der ersten Komponente 12 sperrt. Durch die zweite Vertiefung 62 wird ein axialer Formschluss erzeugt, welcher Bewegungen der zweiten Komponente 16 entlang der Profil-Längsachse A hin zum stirnseitigen Ende 40 der ersten Komponente 12 sperrt. Folglich wird mit Hilfe der ersten und der zweiten Vertiefung 60, 62 ein axialer Formschluss mit dem innenliegenden Abschnitt 26 in beiden axialen Richtungen relativ zur Profil-Längsachse *A* des Hohlprofils 14 bewirkt. Gesehen in einem Längsschnitt durch das Hohlprofil 14 wird damit mit Hilfe der Vertiefungen 60 und 62 der Umfangsmantel 36 mit dem innenliegenden Abschnitt 26 formschlüssig verzahnt. Durch die ersten Vertiefungen 54, 60 und die zweiten Vertiefungen 56, 62 ist darüber hinaus eine unerwünschte Schwenkbewegung der zweiten Komponente 16 zur Profil-Längsachse A hin unterbunden. Es ist denkbar, dass die Vertiefungen 54, 56, 60 und/oder 62 außerhalb der jeweiligen Einformung 44, 46 als separate Einformungen der ersten Komponente 12 ausgebildet sind.

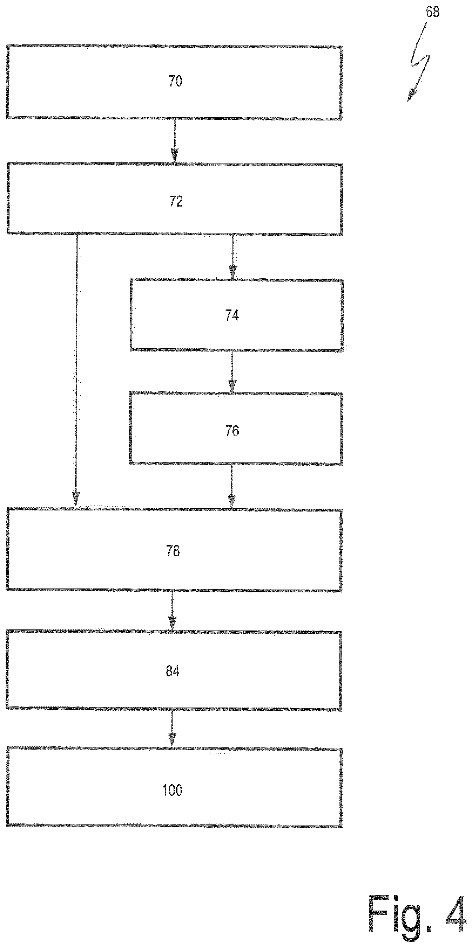

Wie im Nachfolgenden unter Bezugnahme auf die **Figuren 4****,** **5a und 5b** beschrieben wird, werden im ersten Ausführungsbeispiel die erste und die zweite Einformung 44 und 46 jeweils ausgebildet, nachdem ein Endabschnitt **66** der zweiten Komponente 16, welcher den innenliegenden Abschnitt 26 aufweist, durch die erste Aussparung 30 hindurch in das Innere 28 des Hohlprofils 14 eingeführt wurde. Der freie Querschnitt der ersten Aussparung 30 ist daher zur Durchführung des Endabschnitts 66 ausgebildet. Der Endabschnitt 66 wird hierbei in einer Richtung senkrecht (nter einem Winkel von 90°) zur Profil-Längsachse *A* durch die Aussparung 30 durchgeführt.

Im Querschnitt H-H (Figur 3) ist ein freier Durchmesser ***d₁*** der ersten Aussparung 30 größer als ein freier Durchmesser ***d₂*** der Einschnürung 48. Durch den geringeren freien Durchmesser *d₂* der Einschnürung 48 wird nach dem Ausbilden der ersten und der zweiten Einformung 44 und 46, der innenliegende Abschnitt 26 im Inneren 28 des Hohlprofils 14 verankert.

Die **Figur 4** zeigt ein Flussdiagramm eines beispielhaften Verfahrens **68** zur Herstellung des in den Figuren 1 bis 3 illustrierten Gerüstelements 10 (Vertikaldiagonalen) gemäß den Ausführungsbeispielen dieser Offenbarung.

Das beispielhafte Verfahren 68 weist einen Schritt des Ausbildens **70** des ersten ebenen Abschnitts 34 im Umfangsmantel 36 eines Gerüstrohres auf, welches ursprünglich über seine gesamte Länge ein Rundprofil ist. Weist hingegen das Gerüstrohr ursprünglich einen mehreckigen Profilquerschnitt, wie beispielsweise einen rechteckigen Profilquerschnitt, auf, ist es möglich, dass der Schritt des Ausbildens 70 des ersten ebenen Abschnitts 34 entfallen kann. Gemäß einem weiteren Schritt folgt ein Ausbilden **72** der ersten Aussparung 30 im ebenen Abschnitt 34 des Hohlprofils 14. Der ebene Abschnitt 34 erlaubt die Ausbildung der ersten Aussparung 30 durch Stanzen. Wie oben bereits beschrieben wurde, ist es grundsätzlich denkbar, dass die erste Aussparung 30 in einem runden Profilabschnitt, beispielsweise durch Fräsen, ausgebildet wird. Der Schritt 70 kann dann entfallen.

In zwei weiteren optionalen Schritten umfasst das beispielhafte Verfahren 68 ein Ausbilden **74** des zweiten ebenen Abschnitts 38 im Umfangsmantel 36 und den Schritt des Ausbildens **76** der zweiten Aussparung 32 im zweiten ebenen Abschnitt 38. Entsprechend zum oben beschriebenen, ist es denkbar, dass der Schritt des Ausbildens 74 des zweiten ebenen Abschnitts entfallen kann.

Das beispielhafte Verfahren 68 weist ferner den Schritt des Anordnens **78** des innenliegenden Abschnitts 26 der zweiten Komponente 16 im Inneren 28 des Hohlprofils 14 auf. Für das in den Figuren 1 bis 6c gezeigte erste und zweite Ausführungsbeispiel ist dieser Schritt in Figur 5a illustriert, welche einem Querschnitt der Schnittlinie H-H entspricht, deren Verlauf in Figur 2 gezeigt ist. Dadurch, dass der freie Querschnitt der ersten Aussparung 30 so ausgebildet ist, dass der Endabschnitt 66 der zweiten Komponente 16 durch die erste Aussparung 30 durchführbar ist, kann der Endabschnitt 66 von einem Äußeren **80** des Hohlprofils 14 in das Innere 28 des Hohlprofils 14 eingeführt werden, so dass der innenliegende Abschnitt 26 im Inneren 28 des Hohlprofils 14 angeordnet ist. Die Einführbewegung erfolgt im Wesentlichen entlang einer Einführrichtung **82,** welche senkrecht (unter einem Winkel von 90°) zur Profil-Längsachse A des Hohlprofils 14 orientiert ist.

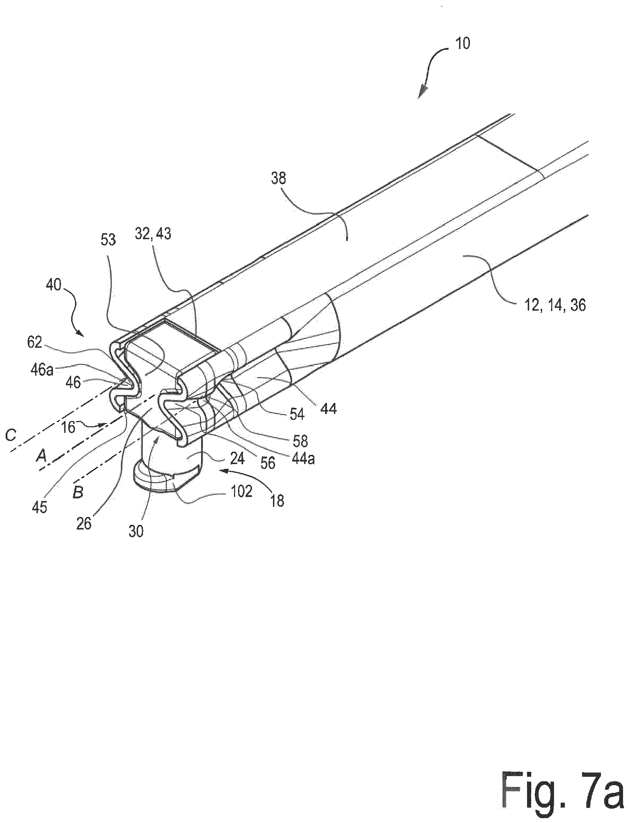

Beim zweiten und dritten Ausführungsbeispiel, welche in den **Figuren 7a bis 8b** dargestellt sind, ist es hingegen möglich, den innenliegenden Abschnitt 26 der Komponente 16 vom stirnseitigen Ende 40 in das Innere 28 des Hohlprofils 14 einzuführen.

Das Verfahren 68 weist ferner den Schritt des Einformens **84** des Umfangsmantels 36 auf, um zumindest die erste Einformung 44 im Umfangsmantel 36 auszubilden, so dass die erste Einformung 44 im Eingriff mit der Ausnehmung 50 des innenliegenden Abschnitts 26 der zweiten Komponente 16 ist. Das beispielhafte Verfahren 68 kann so konfiguriert sein, dass gleichzeitig mit der ersten Einformung 44 die zweite Einformung 46 im Umfangsmantel 36 ausgebildet wird. Dieses gleichzeitige Ausbilden der ersten und der zweiten Einformung 44, 46 ist in der **Figur 5b** dargestellt, welche einen Querschnitt entsprechend der in Figur 2 eingezeichnete Schnittlinie H-H darstellt. Es ist jedoch denkbar, dass lediglich die Einformung 44 im Umfangsmantel 36 ausgebildet wird, ohne die Einformung 46 vorzusehen. Ebenso ist es denkbar, dass die erste und die zweite Einformung 44, 46, nacheinander im Umfangsmantel 36 ausgebildet werden.

Zur Ausbildung der ersten und zweiten Einformung 44 und 46 werden Stempel **86** und **88** im Äußeren 80 des Hohlprofils 14 jeweils in einer Richtung **90, 92** hin zum Inneren 28 des Hohlprofils 14 bewegt. Es ist denkbar, dass einer der Stempel 86 und 88 während des Ausbildens der Einformungen unbeweglich bleibt. Jeder der Stempel 86 und 88 weist jeweils eine Stempelkontur **94, 96** auf, welche zu einer Oberflächenkontur der ersten und der zweiten Ausnehmung 50, 52 der zweiten Komponente 16 korrespondiert. Daher wirkt der innenliegende Abschnitt 26 der zweiten Komponente 16 beim Vorgang des Einformens des Umfangsmantels 36 als Matrize für die Stempel 86 und 88.

Wie in Figur 5b dargestellt ist, können ein oder mehrere bewegliche oder unbewegliche Stempel **98** vorgesehen sein, um beim Einformen des Umfangsmantels 36 den ersten und den zweiten ebenen Abschnitt 34 und 38 zu stützen und/oder zu formen. Dadurch kann beispielsweise erreicht werden, dass die Ränder 45, 43 der ersten und der zweiten Ausnehmung 50, 52 zumindest abschnittsweise spielfrei oder nur mit wenig Spiel an der zweiten Komponente 16 anliegen. Auf diese Weise kann eine gleichmäßigere Krafteinleitung von der zweiten in die erste Komponente erreicht und einer unerwünschten lokalen Überbeanspruchung der ersten Komponente 12 entgegengewirkt werden.

Das beispielhafte Verfahren weist ferner den Schritt des Ausbildens **100** einer oder mehrerer Vertiefungen 54, 56, 60, und 62 auf. Die Vertiefungen 54 und/oder 56 können innerhalb oder außerhalb der Einformung 44 vorgesehen sein. Entsprechendes gilt für die Vertiefungen 60 und 62 in Bezug auf die zweite Einformung 46.

Die Vertiefungen 54, 56, 60, und 62 können beispielsweise mit Hilfe eines oder mehrerer Stempel erzeugt werden, wie dies vorstehend mit Bezug auf **Figur 5b** beschrieben ist. Es ist denkbar, dass der Schritt des Ausbildens 100 der Vertiefungen 54, 56, 60, und 62 zusammen mit dem Schritt des Einformens 84 des Umfangsmantels 36 erfolgt, d.h. dass die Stempelkonturen 94, 96 so ausgebildet sind, dass die damit erzeugte Einformungen gleichzeitig die gewünschten Vertiefungen aufweist.

**Figur 6a** zeigt eine perspektivische Ansicht des Endabschnitts eines Gerüstelements 10 in Form einer Vertikaldiagonalen gemäß einem zweiten Ausführungsbeispiel. **Figur 6b** zeigt eine perspektivische Ansicht der zweiten Komponente 16 des Gerüstelements 10 gemäß dem zweiten Ausführungsbeispiel. Die **Figur 6c** zeigt eine stirnseitige Vorderansicht des Endabschnitts des Gerüstelements 10 gemäß dem zweiten Ausführungsbeispiel.

Die zweite Komponente 16 weist hier ebenfalls einen Verbindungsabschnitt 18 auf, der im Gegensatz zu dem in Fig. 1a gezeigten Ausführungsbeispiel einen Einhängehaken **102** ohne Sicherungselement 20 aufweist. Der Einhängehaken 102 wird in einer Öffnung eines weiteren Systembauteils des zerlegbaren Gerüsts eingehängt, welche beispielsweise in einem Horizontalriegel vorgesehen sein kann. Es ist jedoch auch denkbar, dass der Verbindungsabschnitt 18 des zweiten Ausführungsbeispiels alternativ oder zusätzlich ein Sicherungselement 20 (vgl. Fign. 1a und 1b) aufweist.

Die Umfangskontur der ersten Aussparung 30 entspricht derjenigen des ersten Ausführungsbeispiels, welche wiederum der in der Figur 1a dargestellten Umfangskontur der zweiten Aussparung 32 entspricht. Gemäß Figur 6a ist jedoch die Umfangskontur der zweiten Aussparung 32 unterschiedlich zur Umfangskontur der ersten Aussparung 30. Insbesondere ist eine Umfangslänge des Randes 43 der zweiten Aussparung 32 kürzer als eine Umfangslänge des Randes 45 der ersten Aussparung 30. Dadurch wird das Hohlprofil 14 bei einem im Wesentlichen erhaltenen Lastaufnahmevermögen des Gerüstelements durch die zweite Aussparung weniger stark geschwächt. Es hat sich gezeigt, dass bei einer Krafteinleitung zwischen der ersten Komponente 12 und der zweiten Komponente 16 die Belastung, die auf dem Rand 43 der zweiten Aussparung 32 wirkt, geringer ist als auf dem Rand 45 der ersten Aussparung 30. Daher ist es nicht erforderlich, die zweite Aussparung 32 so auszubilden, dass die Krafteinleitung über eine möglichst große Randfläche des Randes 43 erfolgt. Insbesondere hat es sich als vorteilhaft erwiesen, wenn die Umfangslänge des Randes 43 der zweiten Aussparung 32 geringer ist als 80% oder geringer ist als 70% oder geringer ist als 60% der Umfangslänge des Randes 45 der ersten Aussparung 30.

Wie im ersten Ausführungsbeispiel, welches mit Bezug auf die Figuren 1 bis 5b diskutiert wurde, füllt auch im vorliegenden Ausführungsbeispiel die zweite Komponente 16 einen freien Querschnitt der ersten Aussparung 30 und einen freien Querschnitt der zweiten Aussparung 32 aus. Es sind jedoch für beide Ausführungsbeispiele auch Konfigurationen denkbar, in welchen die zweite Komponente 16 den freien Querschnitt der ersten und/oder der zweiten Aussparung 30, 32 nur teilweise ausfüllt.

Zur Anpassung an die unterschiedlichen Umfangskonturen der ersten Aussparung 30 und der zweiten Aussparung 32 weist die zweite Komponente 16 eine Schulter 104 auf. Von der Schulter erstreckt sich ein verjüngter Abschnitt 105 in einer Richtung weg von der Längsrichtungs-Achse *A* und ist im Eingriff mit zumindest einem Randabschnitt der zweiten Aussparung 32.

Wie dies in der Figur 6c illustriert ist, ist in einem zusammengefügten Zustand die Schulter 104 von einer inneren Oberfläche 106 des zweiten ebenen Abschnitts 38 beabstandet. Alternativ ist es jedoch auch denkbar, dass die zweite Komponente 16 so ausgebildet ist, dass im zusammengefügten Zustand zumindest ein Abschnitt der Schulter 104 an einem Abschnitt der inneren Oberfläche 106 des zweiten ebenen Abschnitt 38 anliegt, insbesondere flächig anliegt. Dadurch wird eine zusätzliche Versteifung der Verbindung zwischen der ersten und der zweiten Komponente 12, 16 bewirkt.

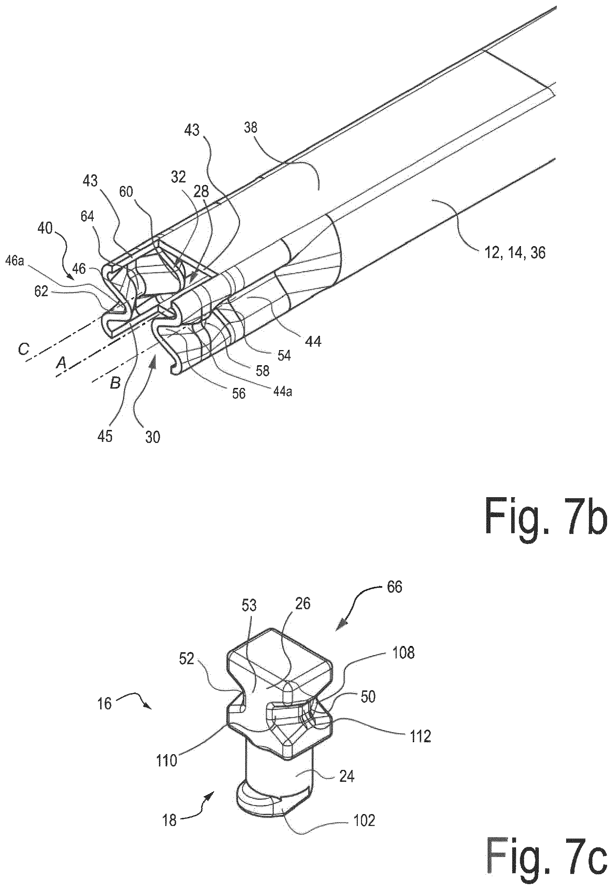

**Figur 7a** zeigt eine perspektivische Ansicht eines Endabschnitts eines Gerüstelements 10 in Form einer Vertikaldiagonalen gemäß einem dritten Ausführungsbeispiel. **Figur 7b** zeigt eine perspektivische Ansicht der ersten Komponente 12 des Gerüstelements 10 gemäß dem dritten Ausgangsbeispiel. **Figur 7c** zeigt die zweite Komponente 16 des Gerüstelements 10 in einer perspektivischen Ansicht.

Gemäß Figur 7c ist die Ausnehmung 50 in der zweiten Komponente 16 so ausgebildet, dass diese eine erste Vertiefung **108** und eine zweite Vertiefung **110** aufweist. Die erste und die zweite Vertiefung 108, 110 sind jeweils tiefer ausgebildet, als ein zwischenliegender Abschnitt **112** der Ausnehmung 50. Der Abschnitt 112 ist in Richtung der Profil-Längsachse *A* zwischen der ersten Vertiefung 108 und der zweiten Vertiefung 110 angeordnet. Die Tiefe der jeweiligen Vertiefung 108, 110 wird dabei in einem jeweiligen Querschnitt gemessen, welcher sich senkrecht zur Profil-Längsachse *A* erstreckt. Durch die Vertiefungen 108, 110 ist die Ausnehmung 50 sattelförmig ausgebildet. Die sattelförmige Ausnehmung 50 mündet in die Stirnfläche 53 des innenliegenden Abschnitts 26, sowie in die zur Stirnfläche 53 entgegengesetzte Stirnfläche des innenliegenden Abschnitts 26.

Die erste Vertiefung 108 korrespondiert mit der Vertiefung 54 (Figur 7a) der ersten Einformung und die zweite Vertiefung 110 korrespondiert mit der Vertiefung 56 der ersten Einformung. Die zweite Ausnehmung 52 der zweiten Komponente 16 ist entsprechend ausgebildet, um Vertiefungen bereitzustellen, welche mit den Vertiefungen 60 und 62 der zweiten Einformung 46 korrespondieren. Dadurch wird eine besonders steife formschlüssige Verbindung zwischen der ersten und der zweiten Komponente 12, 16 ermöglicht.

Es ist denkbar, dass bei dem Gerüstelement gemäß Figuren 1a bis 3 die erste und die zweite Einformung 44 und 46, des Hohlprofils 14 und die erste sowie die zweite Ausnehmung 50 und 52 der zweiten Komponente 16 so ausgebildet sind, wie die im Zusammenhang mit dem Gerüstelement gemäß den Figuren 7a bis 7c erläutert wurde.

Im dritten Ausführungsbeispiel des Gerüstelements 10 ist der Rand 45 der ersten Aussparung 30 und der Rand 43 der zweiten Aussparung 32 zur Stirnseite der ersten Komponente 12 jeweils offen. Zum einen erlaubt dies eine einfache Anordnung des innenliegenden Abschnitts 26 im Inneren der ersten Komponente 12 über das stirnseitige Ende 40 des Hohlprofils 14. Zum anderen ermöglicht dies eine Anpassung der ersten Aussparung 30 und der zweiten Aussparung 32, ohne Rücksicht darauf, dass der innenliegende Abschnitt 26 durch eine der Aussparungen 30, 32 in das Innere 28 des Hohlprofils 14 eingeführt werden muss, wie dies mit Bezug auf Figur 5a beschrieben wurde.

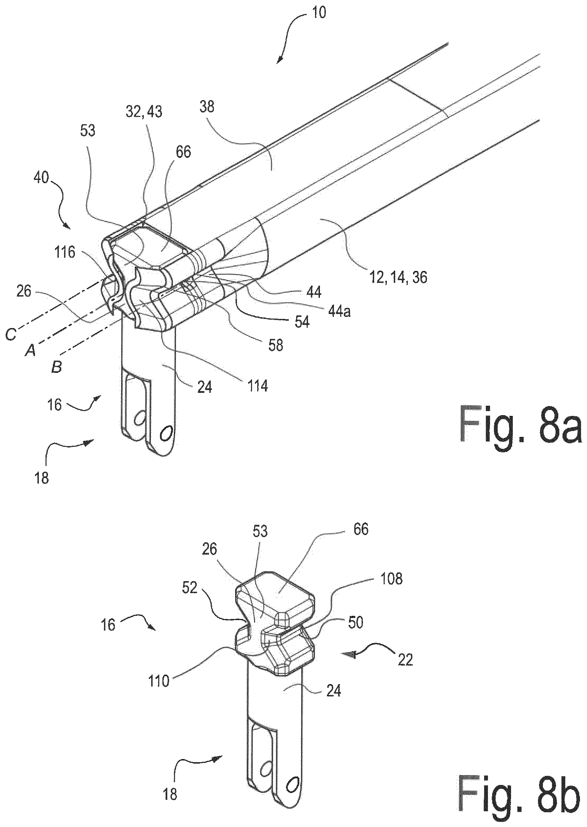

**Figur 8a** zeigt den Endabschnitt eines vierten Ausführungsbeispiels eines Gerüstelements 10 in Form einer Vertikaldiagonalen in einer perspektivischen Ansicht. **Figur 8b** zeigt die zweite Komponente in einer freigestellten perspektivischen Ansicht. Das Sicherungselement ist in den Figuren 8a und 8b aus Darstellungsgründen nicht gezeigt.

Wie im dritten Ausführungsbeispiel ist auch im vierten Ausführungsbeispiel die erste Aussparung 30 und die zweite Aussparung 32 jeweils so ausgebildet, dass der Rand 45 der ersten Aussparung 30 und der Rand 43 der zweiten Aussparung 32 jeweils zum stirnseitigen Ende 40 der ersten Komponente 12 hin offen ist.

Im vierten Ausführungsbeispiel sind durch die zur Stirnseite offenen Ränder 43 und 45 Umfangsabschnitte **114** und **116** des Umfangsmantels 36 gebildet. Diese Umfangsabschnitte 114, 116 sind einander gegenüberliegend angeordnet und übergreifen die zweite Komponente 16 stirnseitig. Gemäß Figur 8a sind die Umfangsabschnitte 114 und 116 um die zweite Komponente 16 umgelegt. Dadurch ist jeder der Umfangsabschnitte 114 und 116 im axialen Eingriff mit dem innenliegenden Abschnitt 26 der zweiten Komponente, und zwar für Bewegungsrichtungen der zweiten Komponente 16 hin zur Stirnseite der ersten Komponente 12. Insbesondere steht der Umfangsabschnitt 114 in Eingriff mit der Vertiefung 110 der ersten Ausnehmung 50 der zweiten Komponente 16 und der Umfangsabschnitt 116 mit einer entsprechenden Vertiefung, welche in der Ausnehmung 52 vorgesehen ist. In dem beispielhaften Verfahren 68, welches mit Bezug auf die Figur 4 beschrieben wurde, kann der Schritt des Umlegens der Umfangsabschnitte 114, 116 beispielsweise nach dem Schritt 84 des Einformens des Umfangsmantels (36) durchgeführt werden und/oder vor oder nach dem Schritt 100 des Ausbildens der Vertiefungen 54, 56, 60, und 62.

Durch die umgelegten Umfangsabschnitte 114, und 116 wird verhindert, dass die Umfangsabschnitte 114 und 116 zu Verletzungen führen können. Zudem kann durch das Umlegen der überstehenden Umfangsabschnitte 114 und 116, verglichen zum dritten Ausführungsbeispiel, Figuren 7a bis 7c dargestellt ist, eine zusätzliche Versteifung der Verbindung zwischen der ersten Komponente 12 und der zweiten Komponente 16 erreicht werden. Ferner bewirken die umgelegten Umfangsabschnitte 114 und 116 einen stirnseitigen axialen Formschluss mit dem innenliegenden Abschnitt 26 relativ zur Profil-Längsachse *A*.

## Patentansprüche

1. Gerüstelement (10) in Form eines Diagonalriegels, für ein zerlegbares Gerüst, aufweisend eine erste und eine zweite Komponente (12, 16), welche alleinig mittels Verpressung starr aneinander befestigt sind, wobei die erste Komponente (12) ein Hohlprofil (14) aufweist, in dessen Innerem (28) ein innenliegender Abschnitt (26) der zweiten Komponente (16) angeordnet ist, wobei das Hohlprofil (14) einen Umfangsmantel (36) mit einer Aussparung (30) aufweist, wobei die zweite Komponente (16), ausgehend vom innenliegenden Abschnitt (26), durch die Aussparung (30) durchtritt und vom Hohlprofil (14) in einer zur Profil-Längsachse (A) des Hohlprofils (14) senkrechten Richtung wegragt und wobei der Umfangsmantel (36) eine Einformung (44) aufweist, welche in Eingriff mit dem innenliegenden Abschnitt (26) ist.

2. Gerüstelement (10) gemäß Anspruch 1, **dadurch gekennzeichnet, dass** in einem Querschnitt senkrecht zu einer Profil-Längsachse (*A*) des Hohlprofils (14), mit Hilfe der Einformung (44) das Hohlprofil (14) und der innenliegende Abschnitt (26) in Umfangsrichtung formschlüssig verzahnt sind.

3. Gerüstelement (10) gemäß Anspruch 1 oder 2, **dadurch gekennzeichnet, dass** zumindest ein Abschnitt der Einformung (44) rinnenförmig ausgebildet ist und wobei eine Rinnenachse (B) des rinnenförmigen Abschnitts im Wesentlichen parallel zu einer Profil-Längsachse (*A*) des Hohlprofils (14) verläuft.

4. Gerüstelement (10) gemäß einem der vorangehenden Ansprüche, **dadurch gekennzeichnet, dass** die Einformung (44) ein Element eines Paares an Einformungen (44, 46) ist, welches im Umfangsmantel (36) ausgebildet ist, wobei jede der Einformungen (44, 46) jeweils im Eingriff mit dem innenliegenden Abschnitt (26) ist und wobei die Einformungen (44, 46) in einem Querschnitt senkrecht zu einer Profil-Längsachse (A) des Hohlprofils (28) eine im Wesentlichen taillenartige Einschnürung (48) des Hohlprofils (14) bilden.

5. Gerüstelement (10) gemäß Anspruch 4, **dadurch gekennzeichnet, dass** im Querschnitt, gesehen in Umfangsrichtung des Hohlprofils (14), die Aussparung (30) zwischen den Einformungen (44, 46) angeordnet ist.

6. Gerüstelement (10) gemäß Anspruch 4 oder 5, **dadurch gekennzeichnet, dass** im Querschnitt ein freier Durchmesser (*d₁*) der Aussparung (30) größer ist als freier Durchmesser (*d₂*) der Einschnürung (48).

7. Gerüstelement (10) gemäß einem der vorhergehenden Ansprüche, **dadurch gekennzeichnet, dass** das Hohlprofil (14) eine zweite Aussparung (32) aufweist, wobei die zweite Komponente (16) im Eingriff mit zumindest einem Randabschnitt eines Randes (43) der zweiten Aussparung (32) ist; und wobei der innenliegende Abschnitt (26) zwischen den zwei Aussparungen (30, 32) das Innere (28) des Hohlprofils (14) durchgreift.

8. Gerüstelement (10) gemäß einem der vorhergehenden Ansprüche, **dadurch gekennzeichnet, dass** die zweite Komponente (16) eine Ausnehmung (50) aufweist, in welche die Einformung (44) eingreift, wobei die Ausnehmung (50) zumindest abschnittsweise rinnenförmig ausgebildet ist mit einer Rinnenachse, welche im Wesentlichen parallel zu einer Profil-Längsachse (*A*) des Hohlprofils (14) orientiert ist.

9. Gerüstelement (10) gemäß Anspruch 8, wobei die Ausnehmung (50) zwei Vertiefungen (108, 110) aufweist, welche, entlang der Rinnenachse gesehen, voneinander beabstandet sind.

10. Gerüstelement (10) gemäß einem der vorhergehenden Ansprüche, **dadurch gekennzeichnet, dass** ein freier Querschnitt der Aussparung (30) zur Durchführung eines Endabschnitts (66) der zweiten Komponente (16) durch die Aussparung (30) ausgebildet ist, wobei der Endabschnitt (66) den innenliegenden Abschnitt (26) aufweist.

11. Gerüstelement (10) gemäß einem der vorhergehenden Ansprüche, **dadurch gekennzeichnet, dass** mit Hilfe der Einformung (44) und/oder einer oder mehrerer weiterer Einformungen im Umfangsmantel (36) ein axialer Formschluss mit dem innenliegenden Abschnitt (26) in zumindest einer axialen Richtung relativ zu einer Profil-Längsachse (A) des Hohlprofils (14) bewirkt wird.

12. Gerüstelement (10) gemäß einem der vorhergehenden Ansprüche, **dadurch gekennzeichnet, dass** die zweite Komponente (16) im Eingriff mit zumindest einem Randabschnitt eines Randes (45) der Aussparung (30) ist.

13. Gerüstelement (10) gemäß einem der vorangehenden Ansprüche, **dadurch gekennzeichnet, dass** die Aussparung (30) in einem im Wesentlichen ebenen Abschnitt (34) des Umfangsmantels (36) ausgebildet ist.

14. Gerüstelement (10) gemäß einem der vorhergehenden Ansprüche, **dadurch gekennzeichnet, dass** ein Rand (45) der Aussparung (30) zu einem stirnseitigen Ende (40) des Hohlprofils (14) offen ist.

15. Gerüstelement (10) gemäß einem der vorhergehenden Ansprüche, **dadurch gekennzeichnet, dass** ein Umfangsabschnitt (114) des Umfangsmantels (36) an einer Stirnseite des Hohlprofils (14) um die zweite Komponente (16) umgelegt ist.

16. Gerüstelement (10) gemäß einem der vorhergehenden Ansprüche, **dadurch gekennzeichnet, dass** die zweite Komponente (16) einen Verbindungsabschnitt (18) zur Befestigung des Gerüstelements (10) innerhalb des Gerüsts aufweist.

17. Verfahren (68) zur Herstellung eines Gerüstelements (10) in Form eines Diagonalriegels, für ein zerlegbares Gerüst, wobei das Gerüstelement (10) eine erste und eine zweite Komponente (12, 16) aufweist, welche alleinig mittels Verpressung starr aneinander befestigt sind, wobei das Verfahren (68) die folgenden Schritte umfasst:
- Ausbilden (72) einer Aussparung (30) in einem Umfangsmantel (36) eines Hohlprofils (14) der ersten Komponente (12);
- Anordnen (78) eines innenliegenden Abschnitts (26) der zweiten Komponente (16) des Gerüstelements (10) in einem Inneren (28) des Hohlprofils (14), so dass die zweite Komponente (16), ausgehend vom innenliegenden Abschnitt (26), durch die Aussparung (30) durchtritt und vom Hohlprofil (14) in einer zur Profil-Längsachse (A) des Hohlprofils (14) senkrechten Richtung wegragt;
- Einformen (84) des Umfangsmantels (36), um eine Einformung (44) im Umfangsmantel (36) auszubilden, welche im Eingriff mit dem innenliegenden Abschnitt (26) ist.

18. Verfahren (68) gemäß Anspruch 17, **dadurch gekennzeichnet, dass** bei dem Einformen (84) die zweite Komponente (16) als Matrize für das Einformen (84) dient.

19. Verfahren (68) gemäß Anspruch 17 oder 18, **dadurch gekennzeichnet, dass** das Verfahren (68) ferner umfasst:
- Ausbilden (70) eines ebenen Abschnitts (34) im Umfangsmantel (36), so dass die Aussparung (30) im ebenen Abschnitt (34) angeordnet ist; wobei das Ausbilden (70) des ebenen Abschnitts (34) insbesondere vor oder insbesondere nach dem Ausbilden der Aussparung (30) durchgeführt wird.

20. Verfahren (68) gemäß einem der Ansprüche 17 bis 19, **dadurch gekennzeichnet, dass** nach dem Einformen (84) des Umfangsmantels (36) die zweite Komponente (16) im Eingriff mit zumindest einem Teil eines Randes (45) der Aussparung ist.

21. Verfahren (68) gemäß einem der Ansprüche 17 bis 20, **dadurch gekennzeichnet, dass** das Verfahren (68) umfasst:
- Ausbilden (76) einer zweiten Aussparung (32), im Umfangsmantel (36), wobei nach dem Einformen (84) des Umfangsmantels (36) die zweite Komponente (16) im Eingriff mit zumindest einem Randabschnitt eines Randes (43) der zweiten Aussparung (32) ist und der innenliegende Abschnitt (26) zwischen den zwei Aussparungen das Innere (28) des Hohlprofils (14) durchgreift.

22. Verfahren (68) gemäß Anspruch 21, **dadurch gekennzeichnet, dass** das Verfahren (68) umfasst:
- Ausbilden (70) eines ersten ebenen Abschnitts (34) im Umfangsmantel (36); und
- Ausbilden (74) eines zweiten ebenen Abschnitts (38) im Umfangsmantel (36), wobei in jedem der ebenen Abschnitte (34, 38) jeweils eine der Aussparungen (30, 32) ausgebildet ist.
